# DEMANDE DE BREVET EUROPEEN

(11) **EP 0 915 579 A1**
(43) Date de publication de la demande: **12.05.1999**
(21) Numéro de dépôt: 98402735.9
(22) Date de dépôt: 03.11.1998
(51) Int. Cl.: H04B 7/26

(54) **Base pour terminal de données numériques sans fil et terminal associé à la base**

(30) Priorité: 05.11.1997 FR 9713909
(71) Demandeur: SAGEM SA, 75116 Paris (FR)
(72) Inventeur: Frederic, Alain, 95610 Eragny Sur Oise (FR)
(74) Mandataire: Bloch, Gérard

(57) **Abrégé**

La base (10) de raccordement sans fil d'un terminal de données numériques (20) à un réseau de transmission comportant une pluralité de voies, de bande passante prédéterminée, comporte des moyens de gestion (5, 11) des voies (7, 8) du réseau agencés pour en sélectionner au moins deux de libres et les associer et des moyens de liaison (1, 2, 3) pour relier les voies (7, 8) à un réseau téléphonique (21) ainsi que des moyens de codage d'amplitude (4) reliés aux voies (7, 8).

## Description

La présente invention concerne le domaine de la domotique et plus particulièrement la transmission numérique sans fil à courte portée.

Actuellement, de nombreux postes téléphoniques comportent une base, reliée par fil au réseau commuté RTC et un combiné mobile relié par liaison sans fil à la base.

La liaison sans fil, souvent radio, entre la base et le combiné, a en général un débit normalisé. Ainsi, la norme DECT prévoit une trame temporelle offrant, sur un canal radio, douze intervalles de temps, ou voies temporelles, pour des liaisons bidirectionnelles à 32 kb/s.

Dans le combiné, la voix détectée par le microphone est numérisée par un codeur pour ainsi être transmise sans altération dans l'une des voies temporelles et elle est ensuite reconvertie dans la base en un signal analogique, qui est émis sur la ligne du RTC. A l'autre extrémité de la ligne, raccordée au central de rattachement de la base, l'amplitude du signal analogique est codée pour fournir un flux de bits à 64 kb/s qui est transmis à travers le RTC et reconverti en analogique en sortie de celui-ci.

Au niveau des voies temporelles radio de la base, la bande passante est, comme indiqué ci-dessus, limitée à la moitié de celle du RTC, afin d'éviter un gaspillage de bande radio. Pour cependant ne pas dégrader en proportion la qualité du signal vocal, celui-ci est, de part et d'autre de la liaison radio, respectivement codé et décodé en amplitude selon une loi autre que celle retenue pour le RTC. Cette autre loi, appelée ADPCM, pour Modulation, Adaptative par Différence, à Codage par Impulsions, tient compte du fait que la voix humaine a une amplitude qui présente une certaine inertie dans son évolution, si bien que, d'un codage au suivant, il suffit de quelques bits pour coder l'évolution, ou différence des deux amplitudes, qui est faible devant l'amplitude elle-même. Il s'agit donc d'une compression de données fondée sur la corrélation entre amplitudes successives.

Par contre, si on voulait transmettre par radio des données numériques à haut débit, d'un PC ou d'un télécopieur, par exemple, les amplitudes successives du signal de données évolueraient plus vite que celles d'un signal vocal et présenteraient de grandes différences. La corrélation entre amplitudes successives disparaîtrait donc, si bien que la compression de données par codage ADPCM serait impossible et le flux de données à transmettre excèderait la capacité en bande-passante de la voie temporelle.

La présente invention vise à permettre une transmission de données numériques par liaison sans fil à haut débit entre une base et au moins un terminal, c'est-à-dire à une vitesse supérieure à ce qu'offre la bande passante de l'une des voies temporelles de la base, tout en restant compatible avec les voies sans fil existantes.

A cet effet, l'invention concerne tout d'abord une base de raccordement sans fil d'un terminal de données numériques à un réseau de transmission comportant une pluralité de voies de bande-passante prédéterminée, base comportant des moyens de gestion des voies du réseau agencés pour en sélectionner au moins deux de libres et les associer.

Ainsi le réseau peut recevoir non seulement des postes téléphoniques adaptés à la bande passante de chacune de ses voies mais également des terminaux ayant un besoin accru en bande passante. Dans le cas de liaisons radio, on respecte ainsi en outre les allocations de bandes de fréquence prévues pour la base.

Avantageusement, des moyens de liaison sont prévus pour relier les voies à un réseau téléphonique.

Tout terminal relié à la base peut ainsi accéder au réseau téléphonique et disposer de la pleine bande passante de celui-ci puisque la base, à bande passante adaptée, ne constitue pas un goulot d'étranglement.

De préférence, il est prévu des moyens de codage d'amplitude reliés aux voies.

Par moyens de codage, on entend des moyens relatifs au codage, c'est-à-dire pour effectuer une conversion analogique/numérique d'un signal et/ou la conversion inverse, la transmission de données pouvant n'être qu'unidirectionnelle.

On peut ainsi transmettre des signaux de données modulés à vitesse élevée puisque le codage d'amplitude est apte à transmettre les variations brusques d'amplitude liées aux transmissions de données.

L'invention concerne aussi un terminal de données numériques pour le raccordement à une base selon l'invention, comportant des moyens de gestion d'une pluralité de voies de transmission sans fil à bande passante prédéterminée, caractérisé par le fait que les moyens de gestion sont agencés pour associer aux moins deux des voies à des moyens d'échange de données du terminal, comportant un codec.

L'invention sera mieux comprise à l'aide de la description suivante d'une forme de réalisation préférée de la base de l'invention, en référence au dessin annexé, sur lequel :
- la figure 1 est une représentation schématique de la base et d'un télécopieur satellite, et
- la figure 2 est un diagramme de cheminement illustrant l'aiguillage d'un appel entrant.

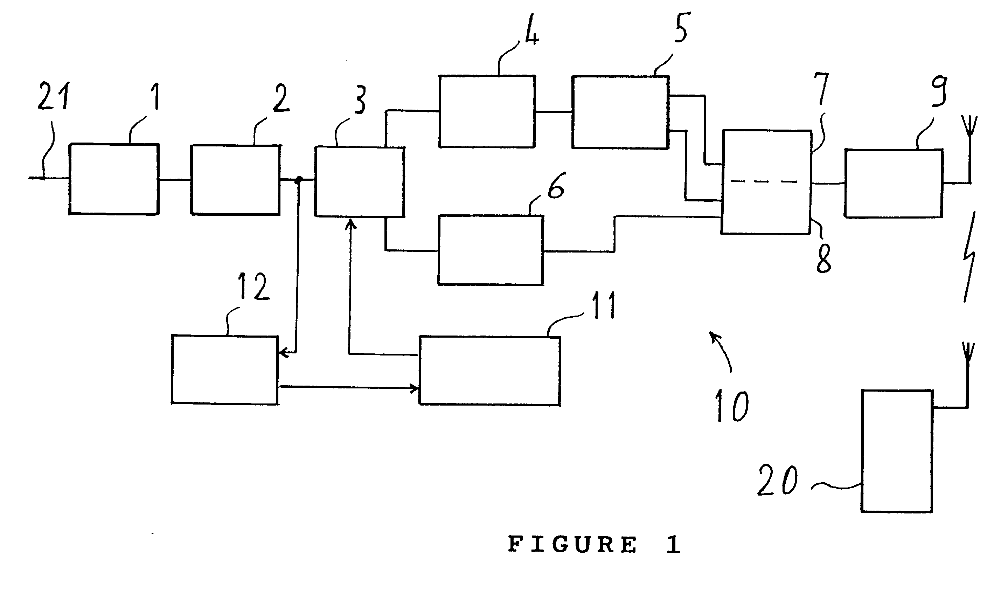

La base 10 de la figure 1 relie par liaison sans fil, ici radio, une ligne 21 du réseau téléphonique commuté RTC à un modem d'un terminal 20, ici un télécopieur.

Dans le sens de propagation des signaux depuis la ligne 21 jusqu'au télécopieur 20, la base 10 comporte dans l'ordre : une interface réseau 1, un convertisseur linéaire analogique-numérique 2, un aiguillage 3 à deux voies pour commuter le convertisseur 2 entre un codeur-décodeur (codec) logarithmique 4, suivi d'un circuit 5 de gestion, ou d'affectation, de voies temporelles, et un codeur-décodeur 6 différentiel ADPCM, ici selon la norme G 726 CCITT. Les codecs 4 et 6 sont en fait ici des transcodeurs puisque c'est le circuit 2 qui effectue le codage-décodage. Les circuits 5 et 6 sont reliés à une matrice de connexion temporelle à douze voies temporelles, représentée sous la forme de seulement deux circuits 7 et 8 ayant chacun une voie temporelle bidirectionnelle.

Un circuit radio émetteur/récepteur 9 assure l'émission et la réception des douze voies temporelles dans des trames correspondantes.

Une unité centrale de gestion 11 à microprocesseur commande le séquencement du fonctionnement des divers circuits et en particulier commande l'aiguillage 3 et la matrice temporelle 7, 8. Un circuit 12, relié en sortie du convertisseur 2, côté aiguillage 3, assure la reconnaissance de porteuses de signalisation reçues de la ligne 21 et en informe l'unité centrale 11.

Le circuit d'interface 1 assure entre autres, de façon classique, la séparation 2 fils/4 fils entre, d'une part, l'entrée, côté RTC, du convertisseur 2 (fonctionnement en convertisseur analogique-numérique : CAN) et la sortie, toujours côté RTC, de ce même circuit 2 fonctionnant alors en CNA.

Le convertisseur bidirectionnel 2, CAN et CNA, convertit cycliquement, ici à un rythme de 8 kHz, l'amplitude de la tension de ligne en un signal numérique codé linéairement sur 13 bits, dont un bit de signe.

L'aiguillage 3 est un simple démultiplexeur à deux voies associé à un multiplexeur à deux voies pour le sens opposé, pour une transmission bidirectionnelle. Le codec 4 effectue, en numérique, un transcodage des 13 bits du convertisseur 2 en un octet, dont 1 bit de signe. Le codec 4 obéit ici à la loi de compression dite loi A qui, comme la loi dite loi µ, est largement utilisée pour les transmissions à travers les réseaux téléphoniques. Ces lois de compression sont dites logarithmiques, c'est-à-dire que le nombre représentant l'amplitude croît de moins en moins vite avec celle-ci, en parcourant divers segments successifs d'une courbe à pente de conversion de plus en plus faible à mesure que cette amplitude devient importante. Le rapport signal/bruit de numérisation ou quantification tend ainsi à rester constant quelle que soit l'amplitude du signal, puisque la taille du pas de quantification pour le numériser varie comme cette amplitude. L'octet comporte, outre le signe, 3 bits indiquant la pente, donc la position sur la courbe, du segment de transcodage utilisé et 4 bits indiquant la portion précise sur le segment. Il s'agit donc du principe de la représentation d'un nombre en virgule flottante, avec un exposant de 3 bits et une mantisse de 4 bits. Le débit est ainsi réduit à 64 kb/s sans dégradation du signal. Le décodage, vers la ligne 21, est effectué selon le principe inverse.

Le circuit 5 permet de relier le codec 4 à au moins deux voies temporelles (7, 8), sous la commande de l'unité centrale 11.

La matrice de connexion temporelle (7, 8) comporte douze registres tampon d'émission et autant en réception, pour assurer les transmissions de bits sur les douze voies temporelles des trames d'émission et réception, ici telles que prévues dans la norme DECT.

Le fonctionnement détaillé de la base 10 avec le télécopieur 20 va maintenant être expliqué.

Dans un mode de fonctionnement classique à bande passante fixée, ici selon la norme DECT, le télécopieur 20 peut dialoguer avec un correspondant, à travers le réseau RTC, jusqu'à une vitesse de modulation de 9,6 kb/s; au-delà, le codage ADPCM apporte une distorsion excessive aux signaux du modem (20).

Pour un débit supérieur à 9,6 kb/s, par exemple 28,8 kb/s, ou plus, l'aiguilleur 3 aiguille alors la ligne 23 sur le codec 4 et le circuit 5 commande l'affectation de deux voies temporelles (7, 8) bidirectionnelles à celui-ci et au télécopieur 20.

Lors d'un appel entrant, l'aiguillage 3, au repos, relie la ligne 21 au codec 6, à 32 kb/s, en supposant a priori qu'il s'agit d'un appel téléphonique vocal vers un combiné non représenté. Le circuit 12 est en écoute des signaux de ligne et, en cas de détection d'une porteuse à modulation connue correspondant à un appareil à vitesse de transmission élevée, comme V17, V29, V32, V34, il en informe l'unité centrale 11. Celle-ci commande alors la commutation de l'aiguillage 3 pour détourner la ligne 23 sur le trajet comportant le codec 4 à 64 kb/s. Le flux correspondant est ici également réparti sur les deux voies 7, 8 à 32 kb/s, c'est-à-dire que les bits issus du codec 4 sont démultiplexés alternativement sur l'une et l'autre voie 7, 8, bit à bit ou octet par octet par exemple, avec un registre tampon d'adaptation du débit instantané. Les voies 7, 8 sont deux voies temporelles quelconques, voisines ou non, dans la trame temporelle, libres à l'instant voulu.

Le télécopieur 20 présente, pour sa partie transmission, une structure et un fonctionnement semblables à ceux de la base 10, c'est-à-dire que l'on peut considérer que le télécopieur 20 comporte une autre base 10 fonctionnant en terminal, satellite de la base 10 représentée, avec, dans le télécopieur 20, le circuit d'interface utilisateur voulu remplaçant l'interface 1, par exemple ici adapté pour relier le modem, d'échange de données, du télécopieur 20 au réseau radio. Le codeur ADPCM 6 est par contre facultatif. Le circuit d'attribution de voies (5) du télécopieur 20 multiplexe les bits des deux voies de réception, qu'il associe, pour alimenter le codec (4) à 64 kb/s associé qui décode les octets reçus et restitue, à l'interface modem évoquée ci-dessus, le signal analogique, modulé à 28,8 kb/s par exemple, émis par le télécopieur appelant. L'émission, par le télécopieur 20 appelé, de signaux de service vers le télécopieur appelant s'effectue selon le même principe, à travers la partie codeur du codec (4) à 64 kb/s du télécopieur 20 et la partie décodeur du codec 4 de la base 10.

On conçoit que les codecs 4 et 6 pourraient chacun intégrer le convertisseur 2, le circuit de détection de porteuse 12 étant alors relié en sortie du codec 4 par exemple et adapté pour traiter les octets en loi A, ou µ. L'aiguillage 3, ou une fonction équivalente d'inhibition de l'un des deux trajets d'aiguillage, serait alors déporté de l'autre côté du codec 4, c'est-à-dire côté matrice 7, 8.

Le principe est le même dans le cas d'un appel sortant vers le réseau (21). S'il s'agit d'un combiné (non représenté) pour la téléphonie vocale, il lui est attribué par défaut une seule voie à 32 kb/s (codec 6). S'il s'agit du télécopieur 20, il transmet à l'unité centrale 11, à travers le codec 6 attribué par défaut et une liaison bidirectionnelle (4-6) non représentée, une demande de bande passante accrue, ici deux voies. L'unité centrale 11 commute alors l'aiguilleur 3 sur le trajet du codec 4 et commande au circuit 5 l'affectation à la communication de deux voies temporelles comme 7 et 8.

D'une façon générale, la base 10 peut servir de noyau central pour relier localement par une liaison sans fil telle que radio ou infrarouge, par un réseau local, domotique, plusieurs terminaux ou appareils électroménagers nécessitant des bandes passantes d'une ou plusieurs fois 32 kb/s. La liaison externe 21 est alors optionnelle, le réseau de la base pouvant être purement sans fil. Il peut cependant être prévu une liaison filaire, en plus ou à la place de la ligne 21 à travers un circuit d'interface utilisateur remplaçant l'interface 1 pour par exemple relier à la base 10 la sortie d'un récepteur haute fidélité recevant, par radio ou câble, des programmes audio diffusés. Il peut encore s'agir d'un lecteur de cassettes ou équivalent, associé à des haut-parleurs distants, c'est-à-dire qu'il s'agit, de façon générale, d'un appareil transducteur restituant les informations reçues et reliée à une entrée du codec 4. Si celles-ci sont déjà numérisées, le codec 4 les transcode selon le code voulu pour leur transmission sans fil.

Le son haute fidélité numérisé est diffusé par la base 10 vers les haut-parleurs périphériques alimentés en signaux à travers un décodeur multi-voie (4) associé à chacun comme interface radio, ayant alors à disposition dix voies temporelles (7, 8) pour recevoir un flux global de 320 kb/s et restituer une modulation d'un signal sonore haute fidélité, c'est-à-dire jusqu'à 40 kHz, soit le double de la limite de l'oreille humaine. Le codec (4) de la base est alors adapté pour coder, sans dégradation notable, le signal sonore. Il peut intégrer la fonction CAN du circuit 2, avec une résolution éventuellement accrue pour limiter le bruit de quantification, et une fréquence de codage, ou échantillonnage, accrue pour couvrir le spectre à transmettre. Il peut aussi être prévu de n'effectuer qu'un codage linéaire (2), en attribuant alors un nombre accru de voies.

Il peut même être envisagé de relier, par le réseau radio de la base 10, la sortie du récepteur, à travers des circuits semblables à ceux de la base 10, afin d'éviter un câblage. La base 10 sert alors de relais radio, avec éventuellement changement des voies temporelles de réémission par rapport à celles de réception en provenance du récepteur haute fidélité.

De même, des capteurs et actionneurs peuvent ainsi communiquer entre eux ou avec l'extérieur, sans nécessité d'un câblage spécifique, tout en disposant d'une bande passante adaptée à leurs besoins respectifs.

Afin de disposer à moindre coût d'un circuit de détection de modulation de porteuse comme 12 qui suive l'évolution des normes de modulation des divers terminaux possibles, il peut être prévu de le déporter dans un terminal de la base 10, de préférence de faible coût et/ou qui est fréquemment changé ou mis à jour pour suivre l'évolution de la technique. Sur un appel entrant, le terminal, ou un autre, ayant répondu et étant connecté à la ligne 23 par le codec 6 a priori, le terminal de détection de modulation écoute les signaux de ligne reçus et informe l'unité centrale 11 de toute détection de signalisation. Celle-ci est ainsi informée de la présence d'un appel provenant d'un modem et commute l'aiguillage 3 vers le codec 4 si cela concerne une transmission à vitesse de modulation dépassant la capacité du codec 6. L'appareil appelant peut en outre déclarer explicitement sa vitesse de modulation, ou bande passante requise, et l'unité centrale 11 choisit en conséquence le nombre voulu de voies temporelles comme 7 et 8.

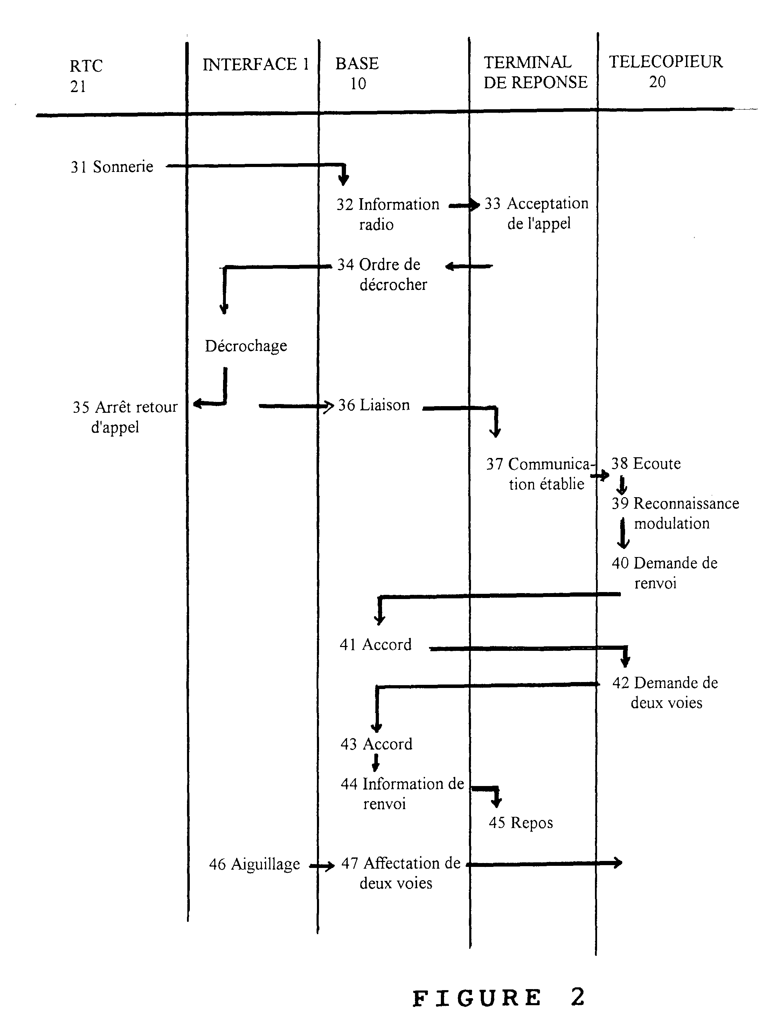

La figure 2 illustre les échanges d'informations correspondants, dans le cas d'un appel entrant provenant d'un télécopieur.

Le RTC retransmet l'appel vers la base 10 sous la forme d'un signal de sonnerie, étape 31, qui est détecté par le circuit d'interface 1, qui en informe l'unité centrale 11. Celle-ci commande l'émission radio d'une information correspondante (32) et un terminal de réponse préposé à cet effet accepte a priori l'appel (33) et émet par radio un ordre de décrocher (bouclage de ligne) (34) que l'unité centrale 11 fait exécuter par l'interface 1, ce qui établit la liaison physique à travers le RTC. Le terminal appelant perçoit alors, en réponse, l'arrêt du signal de retour d'appel, étape 35.

A une étape 36, l'unité centrale 11 établit une liaison par une voie (comme 7) de la matrice temporelle et à travers le codec 6 vers le terminal de réponse, étape 37. Si, comme ici, il s'agit d'un appel provenant d'un télécopieur, il faut maintenant détourner la liaison venant d'être établie pour alors établir la liaison physique (radio) et logique jusqu'au télécopieur 20, a priori différent du terminal de réponse.

Le télécopieur 20 est ici supposé comporter le circuit déporté de reconnaissance de modulations 12 et il se met en écoute radio, étape 38, sur la voie temporelle affectée en entrée au terminal de réponse.

Si le télécopieur 20 reconnaît une modulation le concernant (étape 39), il demande par radio à l'unité centrale 11 à être appelé (demande de liaison par renvoi 40) et celle-ci le lui accorde, sur une autre voie temporelle, étape 41. On notera que, si cette modulation ne le concernait pas, le télécopieur 20 indiquerait cependant à l'unité centrale 11 les caractéristiques de la modulation reconnue, afin qu'elle aiguille l'appel vers un autre terminal, dont elle a, en mémoire de configuration réseau, les caractéristiques de modulation.

Le télécopieur 20, ici concerné, demande alors (42), sur la voie radio, comme 8, qui lui a été affectée, un renvoi de l'appel entrant vers lui et ceci sur deux voies temporelles (7, 8), puisqu'il a reconnu un télécopieur appelant à débit élevé. Le terminal 20 comporte, à cet effet, d'une mémoire comportant l'information selon laquelle il peut fonctionner à un débit supérieur à 9,6 kb/s, c'est-à-dire qu'il lui faut deux voies (7, 8).

Cette mémoire est alors lue par le circuit de reconnaissance 12 et le nombre voulu, de deux voies, est émis vers la base 10, à titre de requête en bande passante. Le processus serait le même si c'était la base 10 qui interrogeait le télécopieur 20 quant à la bande passante qu'il requiert.

L'unité centrale 11, accordant la demande (étape 43), indique (étape 44) au terminal de réponse que la communication est renvoyée sur le télécopieur 20. A l'étape 45, le terminal de réponse repasse au repos. L'unité centrale 11 commande alors (étape 46) l'aiguillage 3 et le circuit 5 (étape 47) pour affecter deux voies temporelles (7, 8) au télécopieur 20 et ainsi utiliser un codage en amplitude selon ici la loi A.

La base 10 peut ainsi être considérée comme constituant fonctionnellement, avec un terminal satellite comme 20, un équipement ou terminal de transmission de données comportant une partie 20 mobile dans l'aire de couverture relative à la liaison sans fil, c'est-à-dire sensiblement la taille d'un local.

## Revendications

1. Base (10) de raccordement sans fil d'un terminal de données numériques (20) à un réseau de transmission comportant une pluralité de voies de bande passante prédéterminée, base comportant des moyens de gestion (5, 11) des voies (7, 8) du réseau agencés pour en sélectionner au moins deux de libres et les associer.

2. Base selon la revendication 1, comportant des moyens de liaison (1, 2, 3) pour relier les voies (7, 8) à un réseau téléphonique (21).

3. Base selon l'une des revendications 1 et 2, dans laquelle il est prévu des moyens de codage d'amplitude (4) reliés aux voies (7, 8).

4. Base selon la revendication 3, dans laquelle les moyens de codage d'amplitude comportent un codec (4) à codage logarithmique relié aux deux voies (7, 8) et un codec différentiel (6) relié à une voie (7, 8) et les moyens de liaison comportent un aiguilleur (3) de sélection de l'un des codecs (4, 6).

5. Base selon la revendication 4, dans laquelle l'aiguilleur (3) est agencé pour être commandé par un circuit (12) de reconnaissance de signalisations reçues par la base.

6. Base selon l'une des revendications 3 à 5, comportant des moyens de connexion pour connecter un appareil électroménager à une entrée des moyens de codage d'amplitude (4).

7. Base selon la revendication 6, dans laquelle les moyens de codage d'amplitude (4) sont agencés pour traiter un signal sonore haute fidélité.

8. Terminal de données numériques (20) pour le raccordement à une base (10) selon la revendication 1, comportant des moyens (5, 11) de gestion d'une pluralité de voies de transmission sans fil (7, 8) à bande passante prédéterminée, caractérisé par le fait que les moyens de gestion sont agencés pour associer aux moins deux des voies (7, 8) à des moyens d'échange de données du terminal (20), comportant un codec (4).

9. Terminal selon la revendication 8, dans lequel il est prévu des moyens de requête d'un nombre déterminé de voies (7, 8).

10. Terminal selon l'une des revendications 8 et 9, dans lequel il est prévu des moyens (12) de reconnaissance de signalisations reliés aux moyens d'échange de données (4) du terminal pour en recevoir des signaux à reconnaître provenant de la base (10) et fournir une réponse à celle-ci.
